# EUROPEAN PATENT APPLICATION

(11) **EP 1 731 414 A2**
(43) Date of publication of application: **13.12.2006**
(21) Application number: 06076189.7
(22) Date of filing: 07.06.2006
(51) Int. Cl.: B62J 1/08

(54) **Coupling for mounting a saddle on a vehicle**

(30) Priority: 07.06.2005 NL 1029203
(71) Applicant: Koninklijke Gazelle B.V., 6951 BP Dieren (NL)
(72) Inventor: Janssen, Lars, 6952 HB Dieren (NL); Nieuwenhuis, Albert-Jan, 4191 DM Geldermalsen (NL)
(74) Representative: Grootscholten, Johannes A.M.

(57) **Abstract**

The invention relates to an assembly, comprising a saddle and a coupling for mounting the saddle on or onto a vehicle from a group of vehicles such as a bicycle, a moped, a tricycle, a motorbike, etc. The assembly comprises a fastening for connecting the coupling and the vehicle; a selectively actuable and adjustable fixing mechanism acting on the saddle for at least angular position adjustment of the saddle relative to the vehicle, which fixing mechanism comprises an operating member which can be used without a tool; and
a longitudinal adjustment acting on the saddle for positioning the saddle relative to the vehicle in a travel direction thereof. The fixing mechanism for the angular position adjustment and the longitudinal adjustment can each individually be selectively activated and operated. The longitudinal adjustment comprises an operating means which can be used without a tool. The longitudinal adjustment and the fixing mechanism are positioned substantially adjacently to each other.

## Description

The present invention relates to an assembly of a saddle and a coupling for mounting the saddle on or onto a vehicle such as a cycle, a moped, a tricycle, a motorbike, etc.

Diverse assemblies, and in particular couplings, are known in the art, for instance from the Netherlands patent publication NL-1.023.807 in the name of the same owner as for the present invention.

The assemblies known from said disclosure comprise a longitudinal adjustment on the basis of a nut-bolt combination to be operated using a tool, and a separate fixing mechanism for the angular position, wherein the longitudinal adjustment cannot be operated in an activating state of the fixing mechanism for the angular position adjustment when an operating member of the fixing mechanism extends along the front of the nut-bolt combination in an activated state thereof. The nut-bolt combination can then simply not be accessed with a tool to be used for changing the longitudinal adjustment.

Another embodiment described in this patent publication comprises a combined mechanism for the angular position adjustment and the longitudinal adjustment, which has the drawback that when adjustment of only one of the two saddle orientations (angular position adjustment and longitudinal adjustment) is desired, the other adjustment option is also released and must be reset by a user.

Similar considerations also apply to assemblies according to the disclosure of European patent application EP-A-1.394.027, in which a coupling also having a combined mechanism for angular adjustment and longitudinal adjustment is realized.

The present invention has for its object to provide an assembly with a saddle and a coupling in addition to a coupling separately, with which the drawbacks of the known art are obviated or at least considerably reduced, for which purpose an assembly and a coupling according to the present invention are distinguished in that: the fixing mechanism for the angular position adjustment and the longitudinal adjustment can each individually be selectively activated and operated; the longitudinal adjustment comprises an operating member which can be used without a tool; and the longitudinal adjustment and the fixing mechanism are positioned substantially adjacently to each other. The present invention realizes a configuration of a coupling with which the angular position adjustment and longitudinal adjustment can be realized independently of each other, wherein an adjustment which does not need modifying can also be retained. The coupling according to the invention moreover also has limited dimensions in at least the height direction thereof. A low position of the saddle relative to the vehicle can hereby be realized since the height dimensions of the coupling between the saddle and the vehicle are a limiting factor in a low position of the saddle, and these height dimensions remain limited in that the fixing means for the angular position adjustment and the longitudinal adjustment are arranged mutually adjacently.

In a preferred embodiment the operating means of the longitudinal adjustment has a handle movable independently of the operating member of the fixing member for the angular position adjustment. A handle or lever is generally deemed a readily usable component for activating a force-dependent mechanism such as a strap or an engaging mechanism, due to the moment of torque which can be generated with such a handle or lever. High fixing, securing or engaging forces can thus be generated without this requiring great muscular force. What is however important is that the handle of the longitudinal adjustment can therefore be moved independently of the operating member of the fixing mechanism, this being possible in various conceivable ways. In such an embodiment the handle can be connected to an engaging mechanism for engaging a component of the saddle suitable for this purpose. The engaging mechanism can thus be activated, herein acting on the suitable component of the saddle, to enable securing of a positioning of the saddle in the longitudinal direction or direction of travel of the vehicle once it has been set. A suitable component is for instance at least one rail running in the length direction corresponding with the direction of travel of the vehicle. This can have an L-shaped cross-section, but can also have any other random design. The suitable component can also comprise a pair of rails arranged on either side of a central longitudinal plane of the coupling. An engaging mechanism taking a dual form can thus also be provided, wherein each of the engaging mechanisms acts on one of the rails. The rails can be given a mirror-symmetrical form relative to the longitudinal direction, i.e. the direction of travel of the vehicle. The saddle can thus be secured on the rails with a very high degree of certainty, engaged by the engaging mechanism or the engaging mechanisms in the activated or activating state thereof.

In an embodiment with an engaging mechanism an assembly according to the present invention can have the feature that the engaging mechanism comprises a pulling mechanism to be operated with the handle and acting on the or each rail, for the purpose of selectively securing the saddle against the coupling under tensile force. Since the positioning of the saddle in the longitudinal direction with the longitudinal adjustment is a linear adjustment option, a very favourable embodiment is provided in the form of the pulling mechanism, which then preferably acts on the or each rail substantially transversely relative to the longitudinal direction. A very reliable fastening of the saddle, at least in respect of the longitudinal direction, can thus be realized.

In an embodiment of an assembly according to the invention with a handle, the handle can extend rearward relative to the direction of travel of the vehicle. This is particularly advantageous for a homogeneous appearance when a lever also extends in rearward direction as a possible embodiment of an operating member of the fixing mechanism. It is then necessary however to take into account a correct positioning of the handle and the lever relative to each other in order to continue to ensure independent operation of both.

The operating member of the fixing mechanism is preferably connected to a clamping mechanism which acts on or around a bush connected to the saddle. Such an embodiment is very favourable, particularly because the fixing mechanism is to be used to position at least the angular position of the saddle and to then allow fixing of the saddle in an angular position once this has been set. A bush with a clamping mechanism, or more particularly a strap, around it is a particularly suitable embodiment for this purpose. It can be favourable here when the clamping mechanism is arranged on the front side in the direction of travel of the vehicle, and the operating member comprises a lever extending rearward from the clamping mechanism relative to the direction of travel. Such a positioning of the lever is particularly advantageous, in combination with the positioning of a handle as a component of the longitudinal adjustment, for a homogeneous appearance as already stated above. It must however also be noted here that such a new property has the advantage that saddle pillars of vehicles, and more particularly bicycles, extend substantially upward and inclining upward to the rear in or at least relative to the direction of travel. With the operating member in the above stated positioning the lever can be moved further downward without possibly causing damage to the saddle pillar, or more specifically the lacquer or paint thereon.

It is stated above that, in preferred embodiments, the handle and the lever extend in rearward direction under the saddle, at least in the activated or activating state thereof. This is of course advantageous, particularly in respect of the safety of the user of the vehicle and also of other road users, since there are no protruding parts in the activated or activating state of the handle or lever. Conversely however, the ability to operate the handle and/or the lever in such a positioning thereof must also be taken into account. It can for instance occur that a child, whether or not in a child's seat, is being carried on the luggage carrier of a bicycle or on the rear of another vehicle. In order to prevent the child beginning to play with the handle and/or the lever and thus releasing the set positioning and orientation of the saddle, which is particularly undesirable during use of the vehicle, more in particular the bicycle, it is recommended to provide a selectively releasable blocking against unintended operation of the handle and/or the lever. Other causes of unintended operation of the handle and/or the lever can thus also be prevented, for instance when a coat gets caught or a bag, in particular a shoulder bag, becomes stuck fast on or behind the handle and/or the lever. Regardless of the reason for providing a blocking, it can be advantageous if the blocking comprises a childproof lock.

In addition, and finally, the present invention can relate to an assembly wherein the fastening serving to connect the coupling with the saddle thereon and the vehicle can be arranged on or comprises: a height adjustment for the saddle. Such a height adjustment can be realized in diverse embodiments. It is for instance possible to make use of a gas spring or other length-adjustable component, for instance in line with the saddle pillar, or any other height adjustment can be provided.

It is further stressed that the present invention also relates to a device per se which forms a coupling in an assembly according to the present invention.

A possible embodiment of an assembly according to the present invention will be described hereinbelow, and more particularly also a coupling, also according to the present invention, with reference to the accompanying figures, which are provided solely by way of example and not as limitative, and in which the same or similar components and parts are designated with the same reference numerals, and in which:
fig. 1 shows a side view of an assembly according to the present invention;
fig. 2 is a bottom view of the assembly shown in fig. 1;
fig. 3 is a perspective view of an assembly according to the present invention as shown in fig. 1; and
fig. 4 shows a view corresponding with fig. 3, but in exploded state.

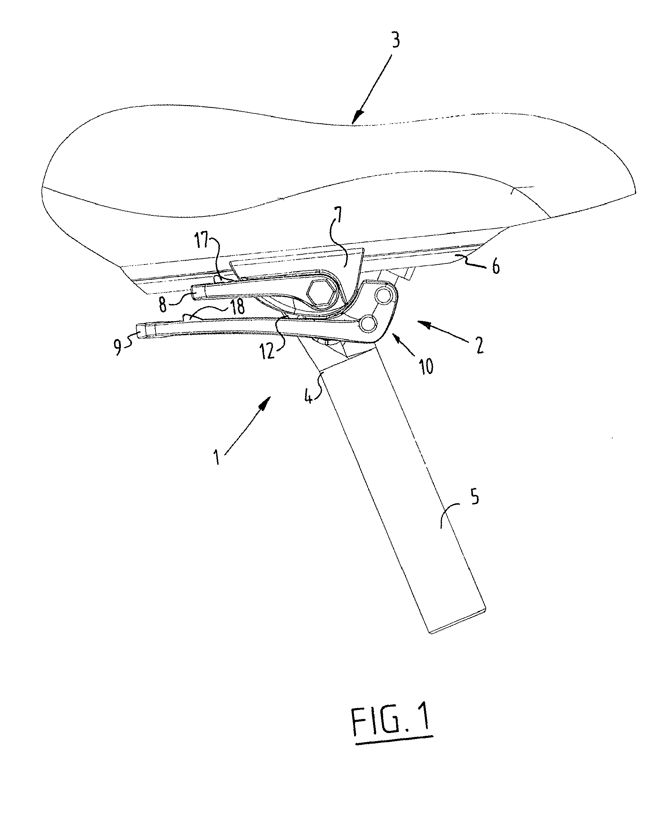

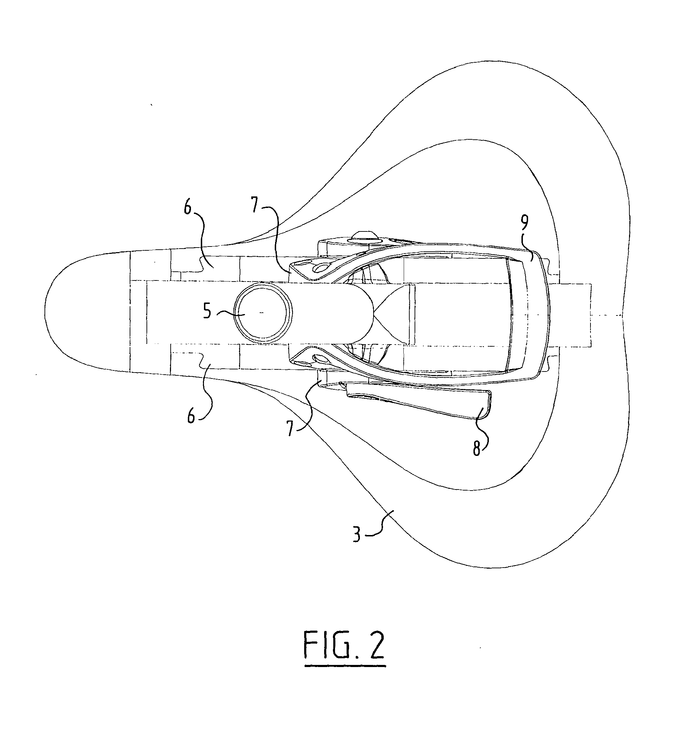

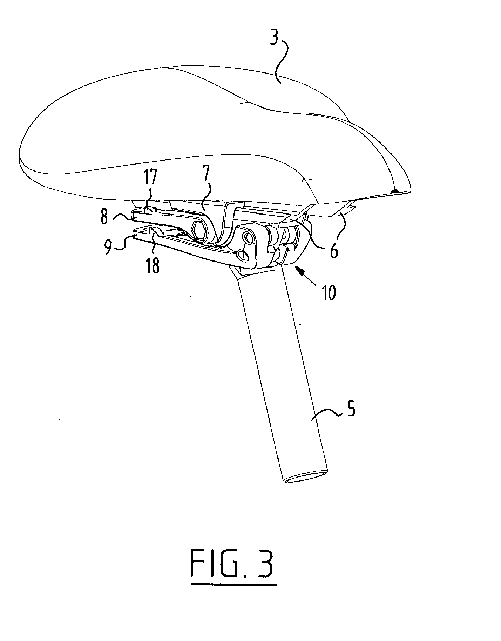

Fig. 1 shows an assembly 1 according to the present invention. This assembly comprises a coupling 2 and a saddle 3. Coupling 2 is connected to a saddle pillar 5 of a bicycle, or a random other vehicle (not further shown), by means of a fastening 4 (not further shown). Two L-shaped rails 6 are arranged on the underside of saddle 3, this being shown more clearly in figures 2 and 3. Rails 6 are L-shaped, as shown most clearly in fig. 3. Both rails have a mirror-symmetrical form relative to the central longitudinal plane of saddle 3 in respect of the direction of forward movement or the direction of travel of the vehicle (not further shown).

Coupling 2 comprises pulling blocks 7, which act on the upper surfaces of the horizontally orientated parts of L-shaped rails 6. The action of pulling blocks 7 on said parts of rails 6 can be selectively activated. Fig. 1 shows an activated or activating state of pulling blocks 7. These latter are here pulled against the horizontally extending upper surfaces of the horizontally running parts of L-shaped rails 6 in order to pull rails 6 against coupling 2. Use is made for this purpose of an engaging mechanism which pulls pulling blocks 7 downward in the direction of coupling 2, or downward in the direction of saddle pillar 5. A handle 8 is provided for this purpose. This extends from a central position relative to coupling 2, at least in the view of fig. 1. With handle 8 in the upward position as shown in fig. 1 the engaging mechanism formed substantially by pulling blocks 7 is activated, and can be released by moving handle 8 downward from the position thereof shown in fig. 1.

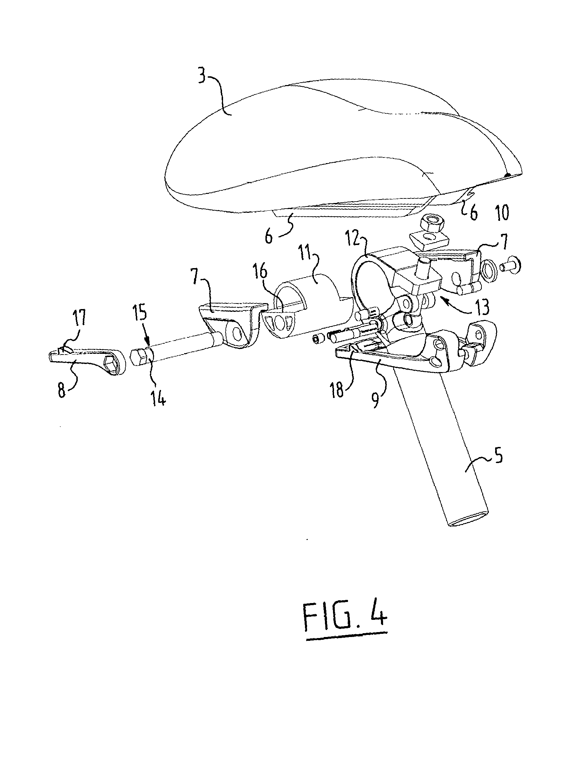

Coupling 2 further comprises a lever 9 which co-acts with a clamping mechanism 10. As is clearly shown in fig. 4, clamping mechanism 10 comprises a strap 12 trained around a bush 11, wherein strap 12 can be pulled tight around bush 11 by means of a rod assembly 13 which can be operated by lever 9. The thus formed configuration strongly resembles the construction known from Netherlands patent publication NL 1023807. In the situation shown in fig. 1 the rod assembly 13, and thereby the clamping mechanism, is activated with lever 9 in a position extending substantially parallel to and under the saddle. The clamping mechanism can be released by moving lever 9 downward, which lever 9 herein has a great degree of freedom of movement because saddle pillar 5 has an inclining position which can be clearly seen in fig. 1.

Fig. 2 clearly shows that handle 8 can be moved downward alongside lever 9 in order to release the engaging mechanism, which is formed substantially by pulling blocks 7. A further description hereof will follow with reference to fig. 4. It can also be seen in fig. 1 that at least a part of strap 12 is situated between rails 6 in the assembled state of assembly 1 shown in fig. 1. A compact construction of coupling 2 is hereby realized, wherein longitudinal adjustment associated with pulling blocks 7, which form an engaging mechanism, and angular position adjustment associated substantially with strap 12 lie substantially adjacently of each other. A compact construction in this case is mainly understood to mean a compact construction in height direction, so that saddle 3 can be set very low without impeding operation of handle 8 or lever 9. This can be a problem particularly on a men's cycle, wherein a bar of the frame of a cycle can extend in horizontal direction relative to saddle pillar 5, which bar would impede the operation of a lever 9 if this latter were to extend in forward direction, which is avoided in the configuration according to the present invention.

As shown in fig. 4, handle 8 can be connected to a shaft 14 which comprises a central part with an eccentric thickened portion 15 having a greater radius. Rotation of handle 8 in a situation connected to shaft 14 can thus bring about that pulling blocks 7 are pulled downward to cause pulling blocks 7 to act, on the basis of tensile force, on the lateral horizontally running parts of rails 6. These horizontally running parts of rails 6 are herein pulled onto shoulders, which are components of bush 11, and clamped between pulling blocks 7 and these shoulders 16.

It is further also noted that a pushbutton 17 can be arranged on handle 8 and a pushbutton 18 can be arranged on lever 9. These serve to prevent unintentional release of the saddle. Only after one of the respective pushbuttons 17, 18 has been pressed can the associated handle 8 or lever 9 be moved downward. A safety precaution can thus be realized to prevent unintentional release of the saddle. A further development of such a configuration, comparable to a childproof lock, lies well within the reach of the person with ordinary skill in the art, and further description thereof can therefore be dispensed with here.

After examination of the foregoing, many alternative and additional embodiments will occur to the skilled person, all of which must be deemed as falling within the scope of the present invention as defined in the claims, or at least within the spirit thereof, unless such additional and alternative embodiments differ on essential points from the scope of protection defined in the claims or the spirit thereof. It is for instance possible to omit a childproof lock or safety means. In a further additional embodiment it is possible to provide fastening 4 with a length adjustment, or to at least couple it to such a length adjustment. Such a length adjustment can for instance be formed by a gas spring, or any other length-adjustable component. The height of saddle 3 can thus also be adjusted in a readily controllable manner, although this requires assembly height, which can for instance be provided or left clear in the frame of a bicycle or other vehicle. In the embodiment described above and shown in the drawings the handle 8 can move alongside lever 9, but diverse other positions of separate operating options are also possible, to the extent separate adjustment of a desired angular position of the saddle and a desired longitudinal adjustment of the saddle can thereby be realized. It is also possible to reverse the configuration, wherein a single T-shaped rail is for instance applied instead of the dual L-shaped rails 6. A two-part bush on either side of the body of the T-shaped rail can then act on the legs of the T-shaped single rail, and a two-part clamp can then be trained round this two-part bush for angular position adjustment. Apart from the possibility of a single T-shaped rail, it is also possible to envisage an embodiment with a single L-shaped rail, to the extent the longitudinal adjustment and the angular position adjustment are positioned substantially adjacently of each other in order to limit as far as possible the assembly height of coupling 2.

## Claims

1. Assembly, comprising a saddle and a coupling for mounting the saddle on or onto a vehicle from a group of vehicles such as a bicycle, a moped, a tricycle, a motorbike, etc., comprising: '
- a fastening for connecting the coupling and the vehicle;
- a selectively actuable and adjustable fixing mechanism acting on the saddle for at least angular position adjustment of the saddle relative to the vehicle, which fixing mechanism comprises an operating member which can be used without a tool; and
- a longitudinal adjustment acting on the saddle for positioning the saddle relative to the vehicle in a travel direction thereof,
wherein: the fixing mechanism for the angular position adjustment and the longitudinal adjustment can each individually be selectively activated and operated; the longitudinal adjustment comprises an operating means which can be used without a tool; and the longitudinal adjustment and the fixing mechanism are positioned substantially adjacently to each other.

2. Assembly as claimed in claim 1, wherein the operating means of the longitudinal adjustment comprises a handle movable independently of the operating member of the fixing member for the angular position adjustment.

3. Assembly as claimed in claim 2, wherein the handle is connected to an engaging mechanism for engaging a component of the saddle suitable for this purpose.

4. Assembly as claimed in claim 3, wherein the suitable component comprises at least one rail running in the length direction corresponding with the direction of travel of the vehicle.

5. Assembly as claimed in claim 4, wherein the suitable component comprises a pair of rails arranged on either side of a central longitudinal plane of the coupling.

6. Assembly as claimed in at least one of the claims 3 and 4 or 5, wherein the engaging mechanism comprises a pulling mechanism to be operated with the handle and acting on the or each rail, for the purpose of selectively securing the saddle against the coupling under tensile force.

7. Assembly as claimed in at least one of the foregoing claims 2-6, wherein the handle extends rearward relative to the direction of travel of the vehicle.

8. Assembly as claimed in at least one of the foregoing claims, wherein the operating member of the fixing mechanism is connected to a clamping mechanism round a bush connected to the saddle.

9. Assembly as claimed in claim 8, wherein the clamping mechanism is arranged on the front side in the direction of travel of the vehicle, and the operating member comprises a lever extending rearward from the clamping mechanism relative to the direction of travel.

10. Assembly as claimed in claim 7 or 9, further comprising a selectively releasable blocking against unintended operation of the handle and/or the lever.

11. Assembly as claimed in claim 10, wherein the blocking comprises a childproof lock.

12. Assembly as claimed in at least one of the foregoing claims, wherein the fastening can be arranged on or comprises: a height adjustment for the saddle.

13. Device which forms a coupling in an assembly as claimed in at least one of the foregoing claims.
